# EUROPÄISCHE PATENTSCHRIFT

(11) **EP 2 539 212 B1**
(45) Veröffentlichungstag und Bekanntmachung des Hinweises auf die Patenterteilung: **04.06.2014**
(21) Anmeldenummer: 11706176.2
(22) Anmeldetag: 21.02.2011
(51) Int. Cl.: B62H 3/00, B62H 3/12, E04H 6/00

(54) **AUFNAHME- UND POSITIONIERUNGSVORRICHTUNG ZUR LAGEDEFINIERTEN EINBRINGUNG UND HALTERUNG VON ZUMINDEST TEILWEISE PEDALBETRIEBENEN ZWEIRADFAHRZEUGEN IN ZWEIRAD-AUFBEWAHRUNGSEINRICHTUNGEN**
ACCOMMODATING AND POSITIONING DEVICE FOR INSERTING AND RETAINING AT LEAST PARTIALLY PEDAL-OPERATED TWO-WHEELED VEHICLES IN TWO-WHEELED VEHICLE STORAGE APPARATUSES IN A DEFINED POSITION
DISPOSITIF DE RÉCEPTION ET DE POSITIONNEMENT POUR L'INTRODUCTION DÉFINIE EN POSITION ET LA FIXATION DE VÉHICULES À DEUX ROUES FONCTIONNANT AU MOINS EN PARTIE AVEC DES PÉDALES SUR DES DISPOSITIFS DE STOCKAGE DE DEUX ROUES

(30) Priorität: 23.02.2010 DE 102010009123
(43) Veröffentlichungstag der Anmeldung: 02.01.2013
(73) Patentinhaber: 3B Tec Aufbereitungssysteme GmbH Technik Für Bergbau, Bauindustrie Und Baustoffindustrie, 14974 Ludwigsfelde (DE)
(72) Erfinder: OLDENGOTT, Michael, 14199 Berlin (DE); BAIER, Martin, 04229 Leipzig (DE); HOREZKY, Reinhardt, 01219 Dresden (DE); KIESSLICH, Günther, 04329 Leipzig (DE); WIERSCHKE-KAMINSKI, Anja, 14974 Ludwigsfelde (DE); ROUSTAIZADEH, Mohammad, Reza, 14193 Berlin (DE)
(74) Vertreter: Hecht, Jan-David
(86) Internationale Anmeldenummer: PCT/EP2011/000815
(87) Internationale Veröffentlichungsnummer: WO 2011/103989

(56) Entgegenhaltungen:
- JP-A- 10 157 678
- NL-A- 7 416 689
- US-A- 5 690 234

## Beschreibung

Die Erfindung betrifft eine Aufnahme- und Positionierungsvorrichtung zur lagedefinierten Einbringung und Halterung von zumindest teilweise pedalbetriebenen Zweiradfahrzeugen in Zweirad-Aufbewahrungseinrichtungen.

Aus dem Stand der Technik ist eine Vielzahl von Zweirad-Aufbewahrungseinrichtungen, vom überdachten Fahrradständer bis zu einem so genannten Fahrradtresor bekannt. Diese Aufbewahrungseinrichtungen dienen der Witterungs- und möglichst auch diebstahlgeschützten Unterbringung von Zweirädern, wobei zunehmend auch auf deren möglichst Platz sparende Unterbringung Wert gelegt wird.

Aus der NL 7416689 ist eine Zweiradaufnahme- und Positionierungsvorrichtung mit den Merkmalen des Oberbegriffes des Anspruchs 1 bekannt.

In der als "Fahrradhaus" bezeichneten Einrichtung nach DE 92 17 562 U1 werden Fahrräder in einer Art Karussell jeweils mit dem Vorderrad in von oben herabragende hakenförmige Halter kreisförmig nebeneinander eingehängt, wobei sie, lediglich am Vorderrad erfasst, lose und je nach Lage des Gesamtschwerpunktes des jeweiligen Fahrrades, mehr oder weniger senkrecht herabhängen. Die Laufflächen der Räder weisen nach innen zur Mittelachse des Karussells, während die Sattel und Lenkstangen nach außen weisen. Eine besonders Platz sparende Unterbringung der Fahrräder wird ermöglicht, indem die hakenförmigen Halter höhenverstellbar sind und dadurch die von den Fahrrädern seitlich vorstehenden Lenkstangenenden und Pedale mit denen der jeweils unmittelbar benachbarten Fahrräder "verschachtelt" werden können. Auf diese Weise soll es möglich sein, in dem karussellförmigen Fahrradhaus bis zu zwölf Fahrräder bei einem Durchmesser des Hauses von nur 2,8 m aufzunehmen.

Das Haus hat den Nachteil, dass das Einhängen der Fahrräder in die höhenverstellbaren Haken allein von Hand und nur mit Muskelkraft erfolgt, wobei die Höheneinstellung der Halter zwecks "Verschachteln" der vom Fahrrad seitlich hervorstehenden Teile mit den von den benachbarten Fahrrädern vorstehenden Teilen durch Versuch ermittelt werden muss. Hierbei kommt es unvermeidlich zu gegenseitigen Beschädigungen z.B. der Lackierung oder von anderen stoßempfindlichen Teilen. Außerdem ist diese Art der gemeinsamen Unterbringung, da die Fahrräder nicht räumlich voneinander getrennt aufbewahrt werden, nur für Mietergemeinschaften oder ähnliche Zwecke geeignet, bei denen ausschließlich einander bekannte Nutzer Zugang haben. Sie eignen sich keinesfalls für eine öffentliche Nutzung.

Zur öffentlichen Nutzung wurde deshalb eine Einrichtung entwickelt, die als "Fahrradtresor" bezeichnet wird und in der DE 195 00 094 A1 beschrieben ist. Hier werden die Fahrräder in einzelne als Boxen bezeichneten Aufnahmeeinrichtungen eingestellt, zu denen nur jeweils befugte Personen Zugang haben. In einer der beschriebenen Ausführungsformen sind die Boxen - und damit auch die Fahrräder-ebenfalls karussellartig und damit insgesamt Platz sparend angeordnet. Allerdings kann dieses Karussell durch die zusätzlichen Trennwände und die fehlende "Verschachtelung" nicht so viele Fahrräder aufnehmen wie das vorerwähnte Fahrradhaus. Auch bei dieser Aufbewahrungseinrichtung werden die Fahrräder mittels eines Hakens am Vorderrad erfasst und in eine lose nach unten hängende Lage angehoben. Zum bequemen Hochziehen des Vorderrads dient hier eine als "Fahrradlift" bekannte Hebelmechanik mit Gasdruckfeder.

Diese Einrichtung hat den Nachteil, dass das undefinierte, lose und mehr oder weniger senkrechte Herabhängen der Fahrräder nicht die bezüglich Höhe, Breite und Tiefe der Aufnahmeeinrichtung Platz sparendste Position eines Fahrrades darstellt. Außerdem ist bei Bewegung der Boxen, z. B. beim Drehen eines aus solchen Boxen gebildeten Karussells in die Beschickungs- und Entnahmeposition, ein Schaukeln der lose herabhängenden Fahrräder unvermeidlich, wodurch die vorstehenden Teile des Fahrrades an die Innenwände stoßen und es ebenfalls zu Beschädigungen empfindlicher Oberflächen oder Teile des Fahrrades oder der Innenwände kommen kann.

Schließlich werden in dem DE 86 22 093 U1 Boxen für Zweiradfahrzeuge beschrieben, in welchen je ein Zweiradfahrzeug eingeschlossen werden kann, und die somit - in karussellartig oder auch linear zusammengefügter Anordnung - auch zur öffentlichen Nutzung geeignet sind. Das Zweiradfahrzeug wird beim Einbringen in eine solche Box mit der Lenkstange in einen hakenartigen, unmittelbar hinter dem durch eine Drehtür verschließbaren Eingang der Box vom oben herabhängenden schwenkbaren Halter eingehoben. Beim darauf folgenden weiteren Einschieben des Zweiradfahrzeuges in die Box wird das Vorderrad immer weiter angehoben. Nachdem das Hinterrad ganz eingeschoben ist, kann die Drehtür geschlossen werden, und diese drückt dann gegen den Sattel des Fahrzeuges und hält so das Fahrzeug in einer losen Schrägstellung.

Nachteilig ist, dass der hintere Schutzblechabschnitt beim Einschieben des Fahrzeuges auf dem Boden schleift, wodurch Schutzblech und der dort befestigte Rückstrahler beschädigt werden können. Auch kommt es beim Bewegen der Box durch die lose Hängung zu Schaukelbewegungen des Zweiradfahrzeuges, was ebenfalls, z. B. durch weiteres Schleifen des Schutzblechabschnittes auf dem Boden oder des Sattels an der Drehtür oder durch Anschlagen der vorstehenden Lenkstangenenden an den Wänden der Box zu Beschädigungen des Fahrzeuges oder der Innenseiten der Box führen kann. Außerdem kann der Benutzer der Box verletzt werden, wenn er die Drehtür unachtsam öffnet und ihm das Hinterteil des Fahrzeuges ungebremst entgegenkommt.

Es ist deshalb Aufgabe der Erfindung; eine Aufnahme- und Positionierungsvorrichtung zur lagedefinierten Einbringung und Halterung von zumindest teilweise pedalbetriebenen Zweiradfahrzeugen in auch im öffentlichen Bereich nutzbare und hinsichtlich Höhe, Breite und Tiefe geringst möglichen Raum beanspruchende Zweirad-Aufbewahrungseinrichtungen zu schaffen, die auch ein bequemes Einbringen des Fahrzeuges in die Aufbewahrungseinrichtungen ermöglicht und mit welcher Beschädigungen des Fahrzeuges oder der Aufbewahrungseinrichtungen und Verletzungen des Nutzers der Einrichtungen verhindert werden.

Die Aufgabe wird durch die kennzeichnenden Merkmale des Hauptanspruches 1 gelöst.

Vorteilhafte Ausführungsformen der Erfindung sind Gegenstand der Unteransprüche.

Die Erfindung soll im Weiteren anhand von Ausführungsbeispielen und unter Bezugnahme auf die Figuren 1 bis 7 näher erläutert werden.
Figur 1 zeigt eine schematische perspektivische Ansicht einer erfindungsgemäßen Aufnahme- und Positionierungsvorrichtung;
Figur 2 zeigt die erfindungsgemäße Aufnahme- und Positionierungsvorrichtung nach Figur 1, welche in eine Aufbewahrungseinrichtung eingebaut ist, in Seitenansicht zusammen mit einem Fahrrad, dessen Vorderrad in das Aufnahmeelement einer Hubvorrichtung eingehängt wurde;
Figur 3 zeigt eine der Figur 2 ähnliche Ansicht einer in eine Aufbewahrungseinrichtung eingebauten erfindungsgemäßen Aufnahme- und Positionierungsvorrichtung, bei der die Hubvorrichtung betätigt und das Fahrrad in eine für die Aufbewahrung geeignete definiere Endlage gebracht wurde;
Figur 4 zeigt eine schematische Draufsicht auf die erfindungsgemäße Aufnahme- und Positionierungsvorrichtung, welche in eine Aufbewahrungseinrichtung mit kreissegmentförmiger Grundfläche eingebaut ist, und in welcher sich ein Fahrrad in der für die Aufbewahrung geeigneten definierten Endlage befindet;
Figur 5 ist einer Detailansicht eine in der erfindungsgemäßen Aufnahme- und Positionierungsvorrichtung verwendeten Hubvorrichtung, links in Vorder- und rechts in Seitenansicht;
Figur 6 zeigt eine perspektivische Ansicht einer Aufbewahrungsanlage für zumindest teilweise pedalbetriebene Zweiradfahrzeuge, bei welcher zehn Aufbewahrungseinrichtungen karussellförmig zusammengefasst wurden;
Figur 7 zeigt eine der Figur 6 ähnliche perspektivische Ansicht, bei welcher zwanzig Aufbewahrungseinrichtungen zu einer zweistöckigen Aufbewahrungsanlage mit vorgeschaltetem Lift zusammengefasst wurden.

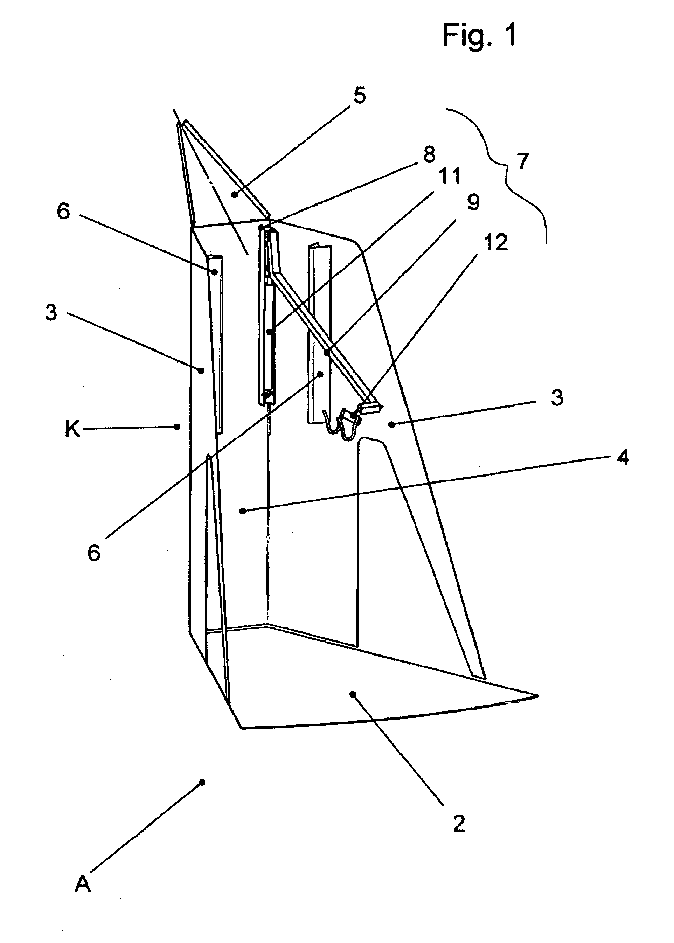

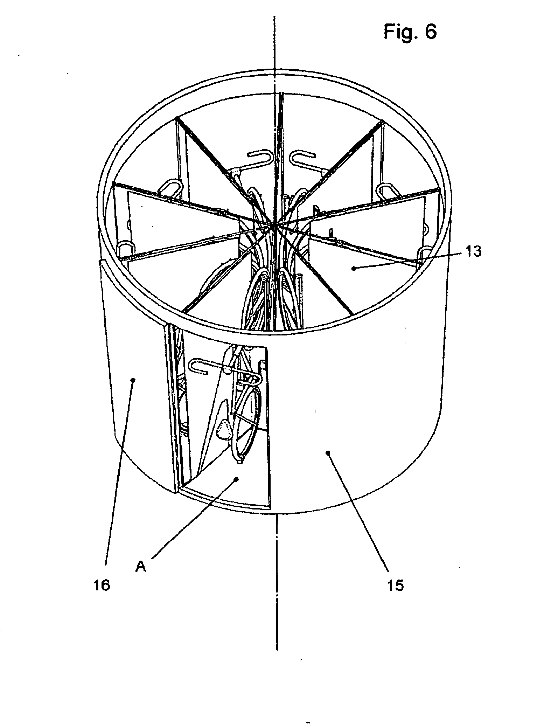

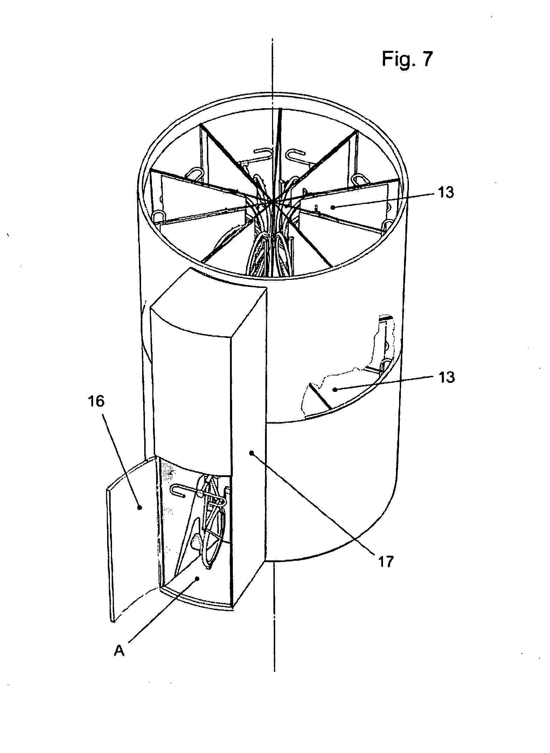

In der perspektivischen Ansicht nach Figur 1 ist der Grundaufbau einer Ausführungsform der erfindungsgemäßen Aufnahme- und Positionierungsvorrichtung A erkennbar. Sie umfasst einen aus einem Bodenteil 2, zwei Seitenteilen 3 und einem Vorderteil 4 bestehenden starren Korpus K. An der Oberkante des Vorderteiles 4 befindet sich eine schräg nach oben weisende, mit dem Vorderteil 4 starr verbundene Vorderradablage 5. An den Seitenteilen 3 ist je ein Pedalanschlag 6 im Wesentlichen senkrecht starr befestigt. Die Pedalanschläge 6 sind parallel zu einander, unterhalb der Vorderradablage 5 und in Richtung zum Zugang der Aufbewahrungseinrichtung vor der Vorderradablage 5 und mit jeweils gleichem seitlichem Abstand von deren Mittelachse angeordnet. Die Pedalanschläge 6 haben die Aufgabe, die Pedale der zumindest teilweise pedalgetriebenen Zweiradfahrzeuge abzustützen und deren Pedalarme im Wesentlichen senkrecht auszurichten. Die senkrechte Ausrichtung ist für die Platz sparende Unterbringung der Zweiradfahrzeuge in Aufbewahrungseinrichtungen mit dreieckiger sowie trapez- oder kreissegmentförmiger Grundfläche wichtig, da bei schräger oder waagerechter Ausrichtung der Pedalarme eines der beiden Pedale eine Vergrößerung des Öffnungswinkels der Grundfläche erfordern würde. Durch die Pedalanschläge 6 wird vor allem erreicht, dass bei Einbringung des Zweiradfahrzeuges in die Vorrichtung keines der beiden Pedale nach vorn in den sich verjüngenden Teil des Korpus K eindringt, und das Zweiradfahrzeug 14 wird durch die Pedalanschläge 6 in einer definierten Schräglage fixiert. Das Hinterrad kann deshalb nicht, der Gesamtschwerkraft des Fahrzeuges folgend, unter dem Vorderrad hindurch weiter nach vorn in die Aufnahme- und Positionierungsvorrichtung A hineinschwenken und mit den Lenkstangenenden als am weitesten seitlich vorstehenden Elementen gegen die Seitenteile 3 der Vorrichtung A oder gegen die in den Figuren 6 und 7 dargestellten Seitenwände 13 der Aufbewahrungseinrichtung stoßen.

Gleichzeitig wird durch die definierte Lage der Pedalanschläge 6 auch gewährleistet, dass das Hinterrad und der Sitz des Zweiradfahrzeuges in dieser Schräglage so wenig wie möglich nach hinten vorstehen, so dass das Zweiradfahrzeug hinsichtlich Höhe, Breite und Tiefe den geringst möglichen Raum in der Aufbewahrungseinrichtung beansprucht. Die Pedalanschläge (6) sind somit für die Positionierung und die stabile Halterung des Zweirades in der Aufnahme- und Positionierungsvorrichtung A besonders wichtig. Durch ihre längliche Ausbildung ist gewährleistet, dass die Pedale von Zweiradfahrzeugen verschiedener Rad- und Rahmengrößen beim Ausheben des Zweirades durch die Hubvorrichtung in verschiedenen Höhen sicher anschlagen können.

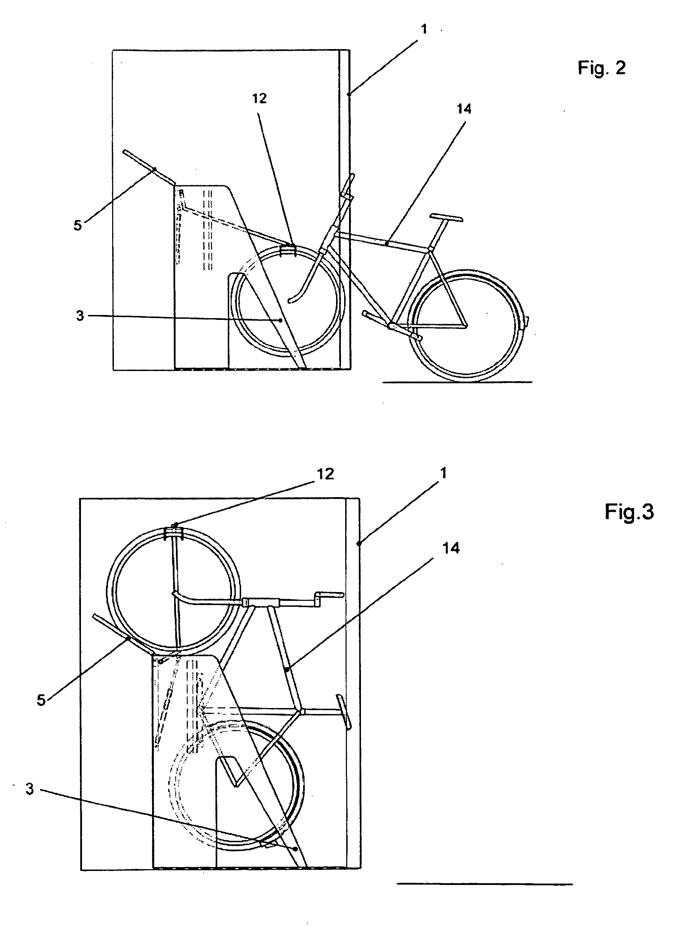

Die erfindungsgemäße Aufnahme- und Positionierungsvorrichtung A ist vorteilhaft so gestaltet, dass sie in einer Zweirad-Aufbewahrungseinrichtung mit dreieckiger, trapezförmiger oder kreissegmentförmiger Grundfläche anordenbar ist. Eine solche Grundfläche schafft in Verbindung mit der in Figur 3 dargestellten definierten Schräglage des Zweiradfahrzeuges 14 die Voraussetzung für eine optimale Raumnutzung der Zweirad-Aufbewahrungseinrichtung. Durch die definierte Halterung des Zweiradfahrzeuges 14 in der Aufnahme- und Positionierungsvorrichtung A wird erreicht, dass der Öffnungswinkel der dreieckigen, trapezförmigen oder kreissegmentförmigen Grundfläche, der sowohl vom Abstand der äußeren Pedalenden als auch vom Abstand der äußeren Lenkstangenenden bestimmt wird, auf ein Minimum reduziert werden kann. Die zum Eingang der Aufbewahrungseinrichtung vorstehenden Lenkstangenteile und der Sitz des Zweiradfahrzeuges 14 werden durch die definierte Schräglage auch soweit wie möglich zum Vorderrad hin angenähert, so dass die Tiefe der Aufnahme- und Positionierungsvorrichtung A minimiert wird.

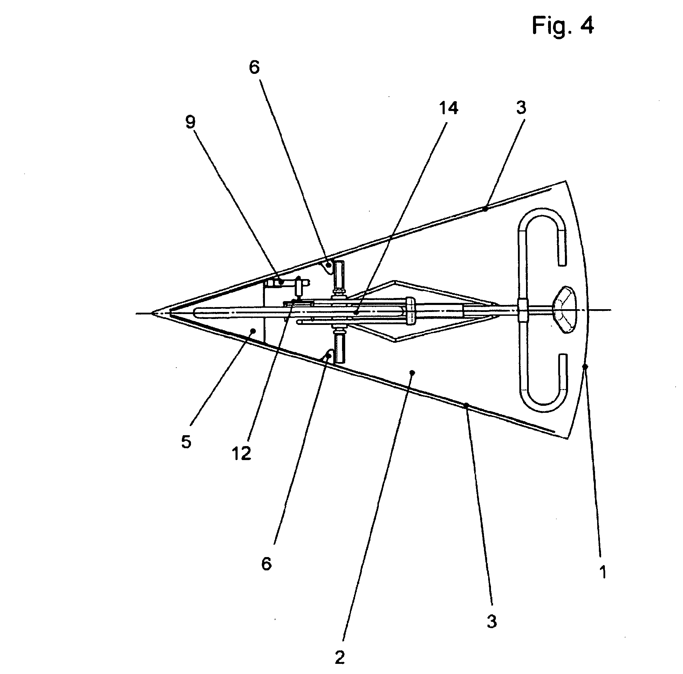

Dies ist in Figur 4 besonders gut erkennbar. Durch die Minimierung des Öffnungswinkels der Grundfläche der Aufbewahrungseinrichtung verringert sich das Raumvolumen 1 der Aufbewahrungseinrichtung, so dass eine größtmögliche Anzahl von Zweiradfahrzeugen in einer karussellartigen Zweirad-Aufbewahrungsanlage aufgenommen werden kann. Wie die Figuren 6 und 7 anschaulich zeigen, ist es durch die geringe Tiefe der Aufbewahrungseinrichtungen möglich, den Durchmesser von Zweirad-Aufbewahrungsanlagen mit karussellartig aneinander gereihten Zweirad-Aufbewahrungseinrichtungen sehr gering zu halten. Bei Benutzung der erfindungsgemäßen Aufnahme- und Positionierungsvorrichtungen A können solche karussellartigen Zweirad-Aufbewahrungsanlagen bis zu zehn Zweiradfahrzeuge aufnehmen, wobei der Durchmesser dieser karussellartigen Aufbewahrungsanlagen drei Meter nicht überschreitet. Dadurch ist es möglich, derartige Aufbewahrungsanlagen mit Lastkraftwagen zu transportieren und sie bei besonderen Ereignissen, zum Beispiel bei Volksfesten, kurzfristig und nahe an die Örtlichkeiten umsetzen zu können.

Die in Figur 1 dargestellte erfindungsgemäße Aufnahme- und Positionierungsvorrichtung A ist kompakt gestaltet, so dass sie in beliebige, zum Beispiel auch in bereits vorhandene Zweirad-Aufbewahrungseinrichtungen oder andere Logistiksysteme eingepasst werden kann.

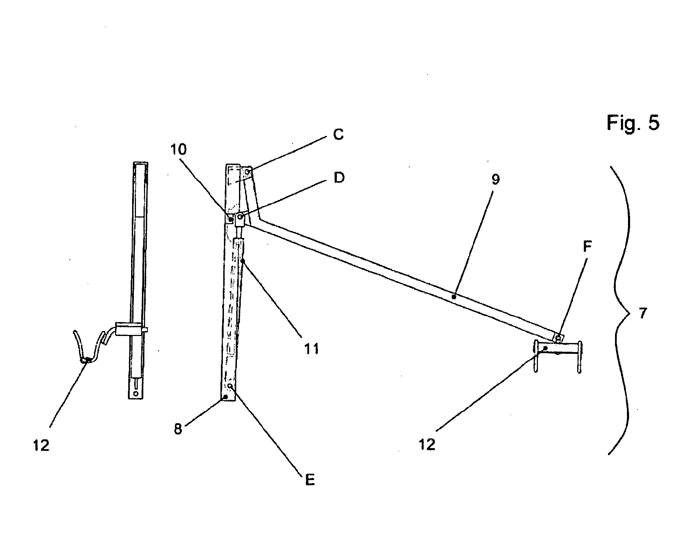

Die in Figur 5 im Einzelnen dargestellte Hubvorrichtung 7 ist, wie Figur 1 zeigt, asymmetrisch im Eckbereich des Vorderteiles 4 und des angrenzenden Seitenteiles 3 angeordnet. Das Zweiradfahrzeug 14 kann dadurch beim Einbringen in die erfindungsgemäße Aufnahme- und Positionierungsvorrichtung A seitlich an der Hubvorrichtung 7 vorbei mit seinem Vorderrad in das Aufnahmeelement 12 eines in der Ausgangsstellung von der Hubvorrichtungsbasis 8 zum Eingang der Aufbewahrungseinrichtung vorstehenden Hubarmes 9 eingehängt werden, wie dies in Figur 1 gut erkennbar ist. Das Aufnahmeelement 12 ist als Doppelklaue ausgebildet und an der Vorderseite des zum Eingang der Aufbewahrungseinrichtung weisenden Hubarmes 9 im Drehpunkt F eines horizontalen Lagers angelenkt. Wie die Seitenansicht in Figur 5 zeigt, ist der Hubarm 9 am oberen Ende einer Hubvorrichtungsbasis 8 im Drehpunkt C angelenkt. Außerdem umfasst die Hubvorrichtung 7 noch einen Anschlag 10, welcher die Ausgangsstellung des Hubarmes 9 für das Einbringen des Zweiradfahrzeuges in die Aufnahme- und Positionierungsvorrichtung A fixiert, sowie eine Gasdruckfeder 11, die am unteren Ende der Hubvorrichtungsbasis 8 im Drehpunkt E und am Hubarm 9 im Drehpunkt D angelenkt ist. Statt der Gasdruckfeder kann auch eine Metallfeder mit oder ohne Bewegungsdämpfer zum Einsatz kommen. Nach Einhängen des Vorderrades in das als Doppelklaue ausgebildete Aufnahmeelement 12 wird das Zweiradfahrzeug 14 z. B. am Sitz kurz nach hinten gezogen, wodurch der Hubarm 9 der Hubvorrichtung 7, aus der in Figur 5 ersichtlichen unteren Lage, in welcher er am Anschlag 10 anliegt, etwas nach oben und die Gasdruckfeder 11 aus ihrer Totpunktlage heraus bewegt wird, wodurch die Gasdruckfeder 11 den Hubarm 9 mit dem daran befestigten Vorderrad des Zweiradfahrzeuges 14 in die in Figur 3 dargestellte Endlage anhebt. Die vom Hubarm 9 ausgeführte Schwenkbewegung hebt das Hinterrad des Zweiradfahrzeuges rechtzeitig vom Boden ab, so dass der hintere Schutzblechabschnitt des Zweiradfahrzeuges und der dort befestigte Rückstrahler nicht beschädigt werden können. Infolge der weitgehend spielfreien Lagerung des Hubarmes 9 und der Ausbildung des Aufnahmeelementes 12 als Doppelklaue mit einer auf ein horizontales Lager beschränkten Beweglichkeit wird das Vorderrad beim Anheben sicher geführt, und das Fahrzeug kann im Lenklager keine seitlichen Schwenkbewegungen ausführen. Die Gasdruckfeder 11 drückt in der in Figur 3 dargestellten Endlage gegen den Hubarm 9, und dieser drückt die Lauffläche des Vorderrades gegen die Vorderradablage 5. Die Pedale schlagen beim Abheben des Hinterrades mit ihren Tretflächen an den mit den Seitenteilen starr verbundenen senkrechten Pedalanschlägen 6 an, wodurch die Pedalhebel senkrecht ausgerichtet werden und das Zweiradfahrzeug in einer stabilen Endlage, die in Figur 4 gut erkennbar ist, gehalten wird. Infolge dieser stabilen Endlage können Schäden am Fahrzeug und an der Aufbewahrungseinrichtung, wie sie in den Einrichtungen des Standes der Technik durch die lose Hängung der Fahrzeuge auftraten, vermieden werden.

Dass das Zweirad in der stabilen Endlage im Wesentlichen an den Tretflächen der Pedale und an der Lauffläche des Vorderrades gehalten wird, ist besonders vorteilhaft, weil diese Flächen ohnehin für starke mechanische Beanspruchung ausgelegt sind und deshalb - anders als z. B. an lackierten Flächen des Zweirades - Beschädigungen beim Einstellen oder Entnehmen des Zweirades oder beim Bewegen der Aufnahme- und Positionierungsvorrichtung A in Aufbewahrungseinrichtungen, wie sie in den Figuren 6 und 7 dargestellt sind, praktisch ausgeschlossen werden können.

Zur Entnahme des Zweiradfahrzeuges 14 aus der in Figur 3 dargestellten Position wird das Fahrzeug 14 am Sitz erfasst und aus der Vorrichtung A gezogen. Dadurch führt der Hubarm 9 eine Schwenkbewegung nach unten aus, hebt das Vorderrad von der Vorderradablage 5 ab, und unter der Last des Fahrzeuges 14 schwenkt der Hubarm 9 weiter nach unten bis in die in Figur 2 dargestellte Ausgangslage. Das Schwenken des Hubarmes 9 erfolgt langsam, weil seine Bewegung durch die Gasdruckfeder 11, die unter der Belastung allmählich zusammengedrückt wird, gebremst wird. Durch das langsame Absenken sind Verletzungen des Benutzers, die bei den Einrichtungen des Standes der Technik auftraten, nicht zu erwarten. Nach Ausheben des Vorderrades aus dem Aufnahmeelement 12 ist das Fahrzeug 14 wieder zur Benutzung bereit.

Wie aus Figur 4 gut erkennbar ist, wird durch die definierte Endlage des Fahrzeuges 14 in der Aufbewahrungseinrichtung das für die Aufbewahrung des Fahrzeuges beanspruchte Raumvolumen 1 minimiert. Die kreissegmentförmige Grundfläche der Aufbewahrungseinrichtung wird durch die kompakte Konstruktion der erfindungsgemäßen Aufnahme- und Positionierungsvorrichtung A optimal genutzt, und es ist möglich, durch karussellartige Zusammenfügung von solchen Aufbewahrungseinrichtungen ein- oder mehrstöckige Anlagen zu erstellten, wie sie in den Figuren 6 und 7 dargestellt sind, und welche aufgrund ihrer geringen Abmessungen sogar mit Lastkraftwagen kurzfristig umgesetzt werden können. Derartige Aufbewahrungsanlagen werden sinnvoll mit bekannten elektronischen Einbüchungsautomatiken ergänzt, wodurch ein Zugang zu einer bestimmten Aufbewahrungseinrichtung der Anlage nur dem jeweils Berechtigten möglich ist. In diesen Anlagen sind die Zweirad-Aufbewahrungseinrichtungen durch feste Außenwandungen 15 geschützt. Die einzelnen Aufbewahrungseinrichtungen sind durch Trennwände 13 voneinander abgeteilt. Wenn die Aufnahme- und Positionierungsvorrichtungen A speziell für solche Aufbewahrungsanlagen gefertigt werden, ist es möglich, die Seitenwände 3 der Aufnahme- und Positionierungsvorrichtungen als Trennwände 13 auszubilden, so dass auf Trennwände in den Anlagen ganz oder teilweise verzichtet werden kann. Die Einbuchungsautomatik bewegt in Figur 6 die aufgerufene Aufbewahrungseinrichtung zu einer Türöffnung und öffnet zwecks Einbringung oder Entnahme eines Zweiradfahrzeuges eine Schiebe- oder Drehtür 16.

Bei einer in Figur 7 dargestellten mehrstöckigen Anlage sorgt ein Lift 17 für den Zugang zu den einzelnen Aufbewahrungseinrichtungen. Hierbei werden die jeweils zugeordneten Aufnahme- und Positionierungsvorrichtungen A durch den Lift 17 aus den einzelnen Zweirad-Aufbewahrungseinrichtungen entnommen und für den Benutzer ebenerdig zum Einbringen bzw. Entnehmen des Zweiradfahrzeuges 14 bereit gestellt. Eine solche Anwendung der erfindungsgemäßen Lösung ist nur durch die kompakte Struktur der Aufnahme- und Positionierungsvorrichtung A möglich, weil diese starr und selbsttragend ist und keine zusätzlichen, außerhalb des Systems liegenden Befestigungspunkte benötigt.

## Patentansprüche

1. Aufnahme- und Positionierungsvorrichtung (A) zur lagedefinierten Einbringung und Halterung von zumindest teilweise pedalbetriebenen Zweiradfahrzeugen (14) in Zweirad-Aufbewahrungseinrichtungen, in welche die Zweiradfahrzeuge (14) mit nach vorn weisendem Vorderrad eingeschoben werden, wobei die Aufnahme- und Positionierungsvorrichtung (A) ein das Vorderrad erfassende und haltende Hubvorrichtung (7) aufweist, **gekennzeichnet durch** zwei im Wesentlichen zueinander parallel angeordnete, länglich ausgebildete Pedalanschläge (6), die das Zweiradfahrzeug (14) in einer definierten Schräglage fixieren.

2. Aufnahme- und Positionierungsvorrichtung (A) nach Anspruch 1, **dadurch gekennzeichnet, dass** die Pedalanschläge (6) im Wesentlichen senkrecht angeordnet sind.

3. Aufnahme- und Positionierungsvorrichtung (A) nach Anspruch 1 oder 2, **gekennzeichnet durch** eine die Lauffläche des Vorderrades abstützende Vorderradablage (5), welche oberhalb der Pedalanschläge (6) und aus Richtung Zugang der Aufbewahrungseinrichtung mittig vor diesen angeordnet und starr mit ihnen verbunden ist.

4. Aufnahme- und Positionierungsvorrichtung (A) nach einem der vorhergehenden Ansprüche, **dadurch gekennzeichnet, dass** sie in einer Zweirad-Aufbewahrungseinrichtung mit dreieckiger, trapezförmiger oder kreissegmentförmiger Grundfläche anordenbar ist.

5. Aufnahme- und Positionierungsvorrichtung (A) nach Anspruch 3, **dadurch gekennzeichnet, dass** ein horizontal angeordnetes im Wesentlichen trapezförmiges Bodenteil (2) an seinen beiden sich gegenüberliegenden Längskanten mit je einem vertikal angeordneten Seitenteil (3) und an seiner Vorderkante mit einem vertikal angeordneten Vorderteil (4) starr verbunden ist, dass die einander zugewandten vertikalen Kanten der Seitenteile (3) und des Vorderteiles (4) ebenfalls starr miteinander verbunden sind, dass die Vorderradablage (5) schräg nach oben und außen weisend mit der Oberkante des Vorderteiles (4) starr verbunden ist, dass die Pedalanschläge (6) mit den Innenseiten der Seitenteile (3) in vertikaler Ausrichtung und in gleichem Abstand vom Vorderteil (4) starr verbunden sind und dass eine Basis (8) einer Hubvorrichtung (7) mit dem Vorderteil (4) im oberen Eckbereich des Vorderteils (4) und eines Seitenteils (3) starr verbunden ist.

6. Aufnahme- und Positionierungsvorrichtung (A) nach einem der vorhergehenden Ansprüche, **dadurch gekennzeichnet, dass** die Hubvorrichtung aus einer Basis (8), einem Hubarm (9), einem Hubarmanschlag (10), einer Gasdruckfeder (11) und einem als Doppelklaue ausgebildeten Aufnahmeelement (12) besteht, wobei das hintere Ende des Hubarmes (9) im Drehpunkt (C) an der Oberseite der Basis (8) und das untere Ende der Gasdruckfeder (11) im Drehpunkt (E) an der Unterseite der Basis (8) angelenkt sind, und weiterhin der Hubarm (9) in seinem hinteren Bereich mit dem oberen Ende der Gasdruckfeder (11) im Drehpunkt (D), sowie das Aufnahmeelement (12) mit dem vorderen Bereich des Hubarmes (9) im Drehpunkt (F) gelenkig verbunden sind.

7. Aufnahme- und Positionierungsvorrichtung (A) nach den Ansprüchen 5 oder 6, **dadurch gekennzeichnet, dass** die Seitenteile (3) der Vorrichtung (A) zugleich als Trennwände (13) der Zweirad-Aufbewahrungseinrichtung ausgebildet sind.

## Claims

1. A receiving and positioning device (A) for position defined introduction and support of at least partially pedal driven two wheel vehicles (14) in two wheel vehicle storage devices into which the two wheel vehicles (14) are pushed with a front wheel oriented forward, wherein the receiving and positioning device (A) includes a lifting device (7) engaging and supporting the front wheel, the lifting device **characterized by** two elongated pedal stops (6) arranged essentially parallel to one another which fixate the two wheel vehicle (14) at a defined slant angle.

2. The receiving and positioning device (A) according to claim 1, **characterized in that** the pedal stops (6) are arranged essentially vertical.

3. The receiving and positioning device (A) according to claim 1 or 2, **characterized by** a front wheel receiver (5) supporting a running surface of the front wheel, wherein the front wheel receiver is arranged above the pedal stops (6) and centrally in front of the pedal stops (6) with respect to an access direction of the storage device and permanently connected with the pedal stops.

4. The receiving and positioning device (A) according to one of the preceding claims, **characterized in that** it is arrangeable in a two wheel vehicle storage device with a triangular, trapezoid or circular segment shaped base surface.

5. The receiving and positioning device (A) according to claim 3, **characterized in that** a horizontally arranged essentially trapezoid base element (2) is permanently connected at both of its opposite longitudinal edges with a respective vertically arranged side element (3) and at its front edge with a vertically arranged front element (4), that vertical edges of the side elements (3) and of the front element (4) oriented towards one another are also permanently connected with one another, that the front wheel receiver (5) is permanently connected in upward slanted and outward direction with a top edge of the front element (4), that the pedal stops (6) are permanently connected with insides of the side elements (3) in a vertical orientation and at a uniform distance from the front element (4) and that a base (8) of a lifting device (7) is permanently connected with the front element (4) in an upper corner portion of the front element (4) and of a side element (3).

6. The receiving and positioning device (A) according to one of the preceding claims, **characterized in that** the lifting device includes a base (8), a lifting arm (9), a lifting arm stop (10), a gas pressure spring (11) and a receiving element (12) configured as a double claw, wherein a rear end of the lifting arm (9) is linked in a pivot point (C) at a top side of the base (8) and a lower end of the gas pressure spring (11) is linked in a pivot point (E) at a bottom side of the base (8), and that the lifting arm (9) is linked in its rear portion with an upper end of the gas pressure spring (11) in a pivot point (D) and that the receiving element (12) is linked with the forward portion of the lifting arm (9) in the pivot point (F).

7. The receiving and positioning device (A) according to claim 5 or 6, **characterized in that** the side elements (3) of the device (A) are simultaneously configured as dividing walls (13) of the two wheel vehicle storage device.

## Revendications

1. Dispositif de réception et de positionnement (A) pour l'introduction définie en position et la fixation de véhicules à deux roues (14) fonctionnant au moins en partie avec des pédales sur des dispositifs de stockage de deux-roues, dans lequel les véhicules à deux roues (14) sont introduits avec la roue avant dirigée vers l'avant, le dispositif de réception et de positionnement (A) présentant un dispositif de levage (7) saisissant et retenant la roue avant, **caractérisé par** deux butées de pédales (6) disposées de façon essentiellement parallèle entre elles et constituées de façon allongée qui fixent le véhicule à deux roues (14) dans une position oblique définie.

2. Dispositif de réception et de positionnement (A) selon la revendication 1, **caractérisé en ce que** les butées de pédales (6) sont disposées de façon essentiellement verticale.

3. Dispositif de réception et de positionnement (A) selon la revendication 1 ou 2, **caractérisé par** un appui pour roue avant (5) soutenant la bande de roulement de la roue avant et qui est disposé au-dessus des butées de pédales (6) et, en partant de la direction d'accès du dispositif de stockage, de façon centrée devant ces butées, et est raccordé rigidement avec elles.

4. Dispositif de réception et de positionnement (A) selon une des revendications précédentes, **caractérisé en ce qu'**il peut être agencé dans un dispositif de stockage de deux-roues avec une surface de base triangulaire, trapézoïdale ou en forme de segment de cercle.

5. Dispositif de réception et de positionnement (A) selon la revendication 3, **caractérisé en ce que**, sur ses deux arêtes longitudinales opposées, une partie de fond (2) essentiellement trapézoïdale disposée horizontalement est raccordée de façon rigide à respectivement une partie latérale (3) disposée verticalement et est raccordée, sur son arête avant, à une partie avant (4) disposée verticalement, **en ce que** les arêtes verticales, tournées les unes vers les autres, des parties latérales (3) et de la partie avant (4) sont également raccordées les unes aux autres de façon rigide, **en ce que** l'appui pour roue avant (5) est raccordé de façon rigide à l'arête supérieure de la partie avant (4) en position inclinée vers le haut et dirigée vers l'extérieur, **en ce que** les butées de pédales (6) sont raccordées de façon rigide aux côtés intérieurs des parties latérales (3) dans une orientation verticale et avec une distance égale à la partie avant (4), et **en ce qu'**une base (8) d'un dispositif de levage (7) est raccordée de façon rigide à la partie avant (4) dans la zone d'angle supérieure de la partie avant (4) et d'une partie latérale (3).

6. Dispositif de réception et de positionnement (A) selon une des revendications précédentes, **caractérisé en ce que** le dispositif de levage se compose d'une base (8), d'un bras de levage (9), d'un butée de bras de levage (10), d'un ressort à pression à gaz (11) et d'un élément de réception (12) constitué en tant que double griffe, l'extrémité arrière du bras de levage (9) étant articulée au niveau du pivot (C) sur le côté supérieur de la base (8), et l'extrémité inférieure du ressort à pression à gaz (11) étant articulée au niveau du pivot (E) sur le côté inférieur de la base (8), et également le bras de levage (9) étant, dans sa zone arrière, raccordé de façon articulée à l'extrémité supérieure du ressort à pression à gaz (11) au niveau du pivot (D), et l'élément de réception (12) est raccordé de façon articulée à la zone avant du bras de levage (9) au niveau du pivot (F).

7. Dispositif de réception et de positionnement (A) selon les revendications 5 ou 6, **caractérisé en ce que** les parties latérales (3) du dispositif (A) sont constituées en même temps en tant que parois de séparation (13) du dispositif de stockage de deux-roues.
